# EUROPÄISCHE PATENTSCHRIFT

(11) **EP 2 546 718 B1**
(45) Veröffentlichungstag und Bekanntmachung des Hinweises auf die Patenterteilung: **14.09.2016**
(21) Anmeldenummer: 12175317.2
(22) Anmeldetag: 06.07.2012
(51) Int. Cl.: G05D 23/02

(54) **Etagenregulierventil**
Floor regulation valve
Vanne de régulation de l'étage

(30) Priorität: 14.07.2011 DE 102011079161
(43) Veröffentlichungstag der Anmeldung: 16.01.2013
(73) Patentinhaber: ABA Beul GmbH, 57439 Attendorn (DE)
(72) Erfinder: Breuer, Sascha, 57439 Attendorn-Petersburg (DE)
(74) Vertreter: advotec.

(56) Entgegenhaltungen:
- EP-A1- 0 305 357
- EP-A2- 1 394 647
- EP-B1- 1 385 072
- DE-A1- 10 313 278

## Beschreibung

Die Erfindung betrifft ein Etagenregulierventil mit einem Ventilgehäuse, welches einen Einlass und einen Auslass aufweist, die über einen Steuerkanal miteinander verbunden sind und das einen Ventileinsatz mit einem Steuerkolben und mit einem den Steuerkolben verstellenden Thermostatelement aufnimmt, wobei an den Steuerkolben ein Steuerzapfen angeformt ist, der in den Steuerkanal eintaucht.

Warmwasserversorgungsanlagen großer Ausdehnung mit weit verzweigten Leitungssträngen, insbesondere in mehrstöckigen Gebäuden, sind des Öfteren mit einer Etagen-Zirkulationsleitung versehen. Diese Zirkulationsleitung lässt das warme Wasser ständig zirkulieren und ermöglicht somit eine schnelle Verfügbarkeit des warmen Wassers. Andererseits bildet eine solche Warmwasserzirkulation eine ideale Umgebung für die Ausbildung von Keimen und Bakterien und stellt damit eine gefährliche Erregerquelle für Infektionskrankheiten dar. Um die Ausbreitung der Bakterien wirkungsvoll zu verhindern, werden Zirkulationsleitungen regelmäßig mit einer Temperatur oberhalb von 65° C durchgespült. Die Druckregelung übernehmen dabei Wassertemperatur-geregelte Thermostatventile.

Ein derartiges Thermostat-gesteuertes Regulierventil ist beispielsweise aus der Europäischen Patentschrift EP 1 385 072 B1 bekannt. Das dort offenbarte Regulierventil zeigt einen Regulierkolben, mit einem Regulierzapfen, der in eine Durchlassöffnung eines Ventilsitzes eintaucht. Dabei ist der Ventilsitzring mit dem Ventileinsatz als einheitliches Bauteil ausgeführt, das in ein Ventilgehäuse eingesetzt wird. Bei einer Temperaturerhöhung des Wassers bewirkt die Ausdehnung des Thermostatelements eine Hubbewegung des Regulierkolbens, wobei sich beim Eintauchen des Regulierzapfens in den Ventilsitzring ein Ringspalt zwischen Außenumfang des Regulierzapfens und Innenumfang der Durchlassöffnung einstellt, dessen Breite während des Hubes im Idealfall konstant bleibt und damit zu einem konstanten Volumenstrom auch bei weiterer Temperaturerhöhung führt.

Als nachteilig erweist sich, dass wegen der ungeführten Hubbewegung bei Fertigungsungenauigkeiten eine radiale Bewegungskomponente des Regulierkolbens entstehen kann, die die Ringspaltbreite bei der axialen Hubbewegung verändert, so dass kein konstanter Volumenstrom entsteht. Da in der EP 1 385 072 B1 der Ventileinsatz und der Ventilsitzring einteilig ausgeführt sind, ergibt sich als weiterer Nachteil eine zusätzliche Dichtstelle zwischen Ventilsitzring und Ventilgehäuse, die besondere Aufmerksamkeit bei der Installation dieses Regulierventils erfordert.

Der vorliegenden Erfindung liegt somit die Aufgabe zu Grunde, ein Etagenregulierventil zu schaffen, das in seinem Aufbau möglichst einfach gestaltet ist und bei der Montage tolerant gegenüber Fertigungsungenauigkeiten ist.

Diese Aufgabe wird in Verbindung mit dem Oberbegriff des Anspruchs 1 erfindungsgemäß dadurch gelöst, dass der Steuerzapfen in dem Steuerkanal entlang axial verlaufender Berührlinien geführt wird. Der Steuerzapfen bewegt sich somit bei seiner axialen Hubbewegung radial geführt in dem Steuerkanal und wird bezogen auf die Innenwandung des Steuerkanals stets in gleichem Abstand gehalten. Damit ist gewährleistet, dass die zwischen Außenumfang des Steuerzapfens und Innenumfang des Steuerkanals ausgebildete Strömungsquerschnittsfläche nach Eintauchen des Steuerkanalzapfens während der weiteren Hubbewegung konstant bleibt und somit zu einem konstanten Volumenstrom in Regelstellung führt. Zudem können geringe Fertigungstoleranzen bei der Herstellung des Steuerkanals sowie des Steuerkolbens bzw. des Steuerzapfens ausgeglichen werden.

In einer bevorzugten Ausgestaltung weist der Steuerkanal eine Querschnittsfläche eines Gleichdicks auf. Eine derartige Form der Querschnittsfläche des Steuerkanals ergibt in Verbindung mit einem Steuerzapfen kreisförmigen Querschnitts eine Führung, indem die innere Kreisfläche des Steuerzapfens und das außenliegende Gleichdick umfänglich äquidistant verteilte Berührungspunkte aufweisen zwischen denen sich Teilflächen zu einer gesamten Strömungsquerschnittsfläche zwischen Steuerzapfen und Steuerkanal zusammensetzen.

In alternativer Ausführungsform kann in umgekehrter Weise der Steuerzapfen eine Querschnittsfläche eines Gleichdicks aufweisen und der Steuerkanal mit einem kreisförmigen Querschnitt ausgeformt sein. Auch hier bilden sich zwischen den Berührpunkten Teilflächen aus, die sich zu einer Strömungsquerschnittsfläche zusammensetzen und den Volumenstrom bestimmen.

Die Gleichdick-förmige Querschnittsfläche kann zweckmäßigerweise die Grundform eines Bogendreiecks aufweisen. Diese dreieckförmige Ausführungsform einer Gleichdick- Querschnittsfläche erweist sich hinsichtlich der Führungseigenschaften und des Fertigungsaufwandes als einfache und zugleich wirtschaftliche Lösung.

Als weitere alternative Ausführung kann der Steuerzapfen oder der Steuerkanal angeformte axial verlaufende Führungsstege aufweisen, die den Steuerzapfen radial gegen die Wandung des Steuerkanals abstützen und zwischen denen sich ebenfalls Teilflächen zu einer Strömungsquerschnittsfläche ausbilden.

Besonders vorteilhaft erweist sich, dass der Steuerkanal einteilig mit dem Ventilgehäuse ausgebildet ist. Diese Bauform führt zu dem Wegfall der zusätzlichen Dichtstelle zwischen Ventilgehäuse und Ventilsitzring, da die Durchlassöffnung des Ventilsitzrings durch den in dem Ventilgehäuse ausgeformten Steuerkanal gebildet wird. Eine aus dem Stand der Technik bekannte Konstruktion, bei der der Ventilsitzring mit dem Ventileinsatz als einteiliges Bauteil ausgeführt ist, ist somit nicht erforderlich. Durch den Verzicht auf die zusätzliche Dichtstelle und die Verlagerung der Durchlassöffnung in das Ventilgehäuse vereinfacht sich der Aufbau des Etagenregulierventils und der Herstellungsaufwand verringert sich erheblich.

Alternativ kann der Steuerkanal auch durch einen Ventilsitzring ausgebildet sein, der im Ventilgehäuse angeordnet ist. Der Ventilsitzring ist in diesem Fall mit dem Ventileinsatz jedoch nicht als einteiliges Bauteil ausgeführt, da dies aufgrund der Ausbildung des Steuerkanals nicht mehr notwendig ist. Die separate Ausbildung des Ventilsitzrings ermöglicht einen einfachen Austausch desselben, wenn der Steuerkanal aufgrund Verschleiß oder Verschmutzung erneuert werden soll. Ein kompletter Austausch des Ventilgehäuses ist dann nicht notwendig. Auch kann der Ventilsitzring zur Reparatur eines im Ventilgehäuse ausgebildeten Steuerkanals verwendet werden. Der Steuerkanal kann dann aufgebohrt und der Ventilsitzring in die Bohrung eingesetzt werden.

Zweckmäßigerweise weist der Steuerkolben an dem Übergang zu dem Steuerzapfen eine Ringschulter mit einer umlaufenden Nut auf, in die ein Dichtelement zur Abdichtung in Absperrposition des Etagenregulierventils eingelegt ist. Dieses scheibenförmige Dichtelement, welches den Steuerzapfen umfasst und in der umlaufenden Nut fixiert ist, liegt in der Verschlussposition des Steuerkolbens flach auf dem oberen Rand des Steuerkanals auf und verschließt diesen zuverlässig.
Weiterhin weist der Ventileinsatz zur Abdichtung gegen das Ventilgehäuse einen Dichtring auf. Der Dichtring verhindert, dass das Wasser aus dem Inneren des Ventilgehäuses an der Verbindungsstelle zwischen Ventileinsatz und Ventilgehäuse austritt.

Innerhalb des Ventileinsatzes weist der Steuerkolben zur Abdichtung gegen den Ventileinsatz einen stufenförmigen Absatz mit Dichtring auf. Damit ist während der Hubbewegung des Steuerkolbens sichergestellt, dass an der Kolbenwandung vorbei kein Wasser aus dem Inneren des Ventilgehäuses in den Innenraum des Ventileinsatzes eindringt.

Bevorzugt weist der Steuerzapfen einen ringförmigen Gummieinsatz zur Reinigung des Steuerkanals auf. Während der Hubbewegung des Steuerzapfens entfernt der Gummieinsatz durch Entlangstreifen an der Wandung des Steuerkanals den dort anhaftenden Kalk und verhindert, dass zum einen die Strömungsquerschnittsfläche durch Kalkablagerungen verringert wird und zum anderen die Führung des Steuerkolbens entlang der Berührlinien nicht durch Kalkpartikel behindert wird.

In weiterer Ausgestaltung geht der Steuerzapfen an seinem in den Steuerkanal eintauchenden Ende konisch oder mit einer nach innen gewölbten Mantelfläche in einen Endabschnitt mit verjüngtem Querschnitt über. Eine derartige Ausformung des Steuerzapfens erlaubt es, das Etagenregulierventil in der Grundstellung durch manuelles Absenken bzw. Herausführen des Steuerkolbens so voreinzustellen, dass der verbleibende ringförmige Spalt einen definierten maximalen Volumenstrom zulässt.

Weitere Verläufe einer Temperatur-Volumenstrom-Kurve lassen sich durch eine Hintereinanderschaltung von zwei erfindungsgemäßen Etagenregulierventilen mit individueller Regelcharakteristik erreichen, wobei als Gesamtcharakteristik ein nicht-monotoner Verlauf des Volumenstroms als Funktion der Temperatur einstellbar ist. Dadurch ist eine Abhängigkeit des Volumenstroms von der Temperatur realisierbar, die bei steigender Temperatur zunächst den Volumenstrom auf einen Minimalwert begrenzt und dann ausgehend von diesem minimalen Volumenstrom über einen gewissen Temperaturbereich eine Erhöhung des Volumenstroms zulässt. Bei einer Temperaturerhöhung darüber hinaus wird der Volumenstrom wieder auf seinen Minimalwert begrenzt. Somit kann eine Durchspülung der Zirkulationsleitungen in einem erhöhten Temperaturbereich mit einem über dem Minimalwert liegenden Volumenstrom durchgeführt werden.

Weitere vorteilhafte Ausgestaltungsmerkmale des Etagenregulierventils ergeben sich aus der nachfolgenden Beschreibung und den Zeichnungen, die eine bevorzugte Ausführungsform der Erfindung beispielhaft erläutern.

Es zeigen:
- **Fig. 1:**: ein erfindungsgemäßes Etagenregulierventil in Grundposition im Längsschnitt;
- **Fig. 2:**: das erfindungsgemäße Etagenregulierventil in Absperrposition im Längsschnitt;
- **Fig. 3:**: das erfindungsgemäße Etagenregulierventil in Regelposition im Längsschnitt;
- **Fig. 4a:**: einen Querschnitt durch das Ventilgehäuse entlang des in Fig. 3 bezeichneten Schnittes;
- **Fig. 4b:**: einen Detailausschnitt gemäß A in Fig. 4a.

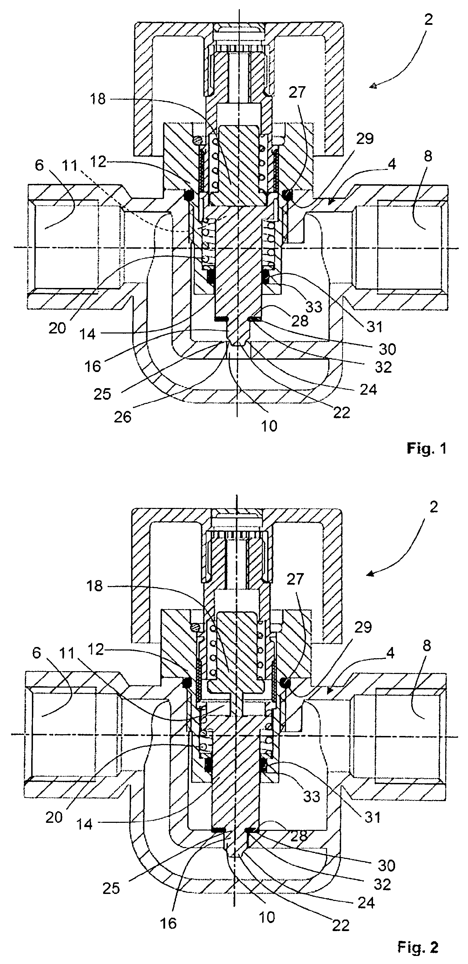

**Fig. 1** zeigt eine bevorzugte Ausführungsform eines Etagenregulierventils 2 in Grundposition im Längsschnitt. Das Etagenregulierventil 2 besteht aus einem Ventilgehäuse 4 mit einem Einlass 6 und einem Auslass 8, die über einen Steuerkanal 10 miteinander verbunden sind. In das Ventilgehäuse 4 ist in einen Aufnahmeschacht 11 ein Ventileinsatz 12 montiert, der einen Steuerkolben 14 mit einem angeformten Steuerzapfen 16 sowie ein Thermostatelement 18 aufnimmt, das bei einer Temperaturänderung gegen die Kraft einer Rückstellfeder 20 auf den Steuerkolben 14 einwirkt. In der in Fig. 1 dargestellten Grundposition, die in einem unteren Wassertemperaturbereich eingenommen wird, taucht der Steuerzapfen 16 mit seinem Endabschnitt 22 nur soweit in den Steuerkanal 10 ein, dass sich die nach innen gewölbte Mantelfläche 24 etwa in Höhe der Eintauchöffnung 25 des Steuerkanals 10 befindet. Der verbleibende ringförmige Spalt 26 bestimmt die Größe des Volumenstroms, der in dieser Grundposition bzw. bei der entsprechenden Temperatur durch das Ventil 2 hindurchfließt.

Zu erkennen ist, dass der Steuerkanal 10 einteilig mit dem Ventilgehäuse 4 ausgebildet ist. Damit entfällt die Notwendigkeit, den Steuerkanal 10 als Ventilsitzring in einer einteiligen Bauform aus Ventileinsatz 12 und Ventilsitzring auszuführen.

Gegenüber dem Ventileinsatz 12 ist das Ventilgehäuse 4 durch einen Dichtring 27 vor dem Austritt von Wasser geschützt. Der Dichtring 27 liegt in einer stufenförmigen Ausnehmung 29 im Öffnungsbereich des Aufnahmeschachtes 11 und schließt diesen bei der Montage des Ventileinsatzes 12 nahezu bündig ab.

Als weitere Dichtstelle weist der Steuerkolben 14 zur Abdichtung gegen den Ventileinsatz 12 einen stufenförmigen Absatz 33 mit Dichtring 31 auf, der während der Hubbewegung des Steuerkolbens 14 ein Eindringen des Wassers in das Innere des Ventileinsatzes 12 verhindert.

In **Fig. 2** ist das erfindungsgemäße Etagenregulierventil 2 in Absperrposition dargestellt. In dieser Stellung ist der Steuerkolben 14 manuell so weit in den Steuerkanal 10 abgesenkt worden, dass der Steuerkolben 14 an dem axial abgestuften Übergang zu dem Steuerzapfen 16 mit einer Ringschulter 28 auf dem Rand der Eintauchöffnung 25 des Steuerkanals 10 aufliegt und eine Durchströmung verhindert.

Zwischen der Ringschulter 28 und dem Rand der Eintauchöffnung 25 ist eine den Regulierzapfen umschließende Flachdichtung 30 als Dichtelement angebracht, die mit ihrem innenseitigen Öffnungsrand in eine in der Ringschulter 28 umlaufende Nut 32 eingepasst ist.

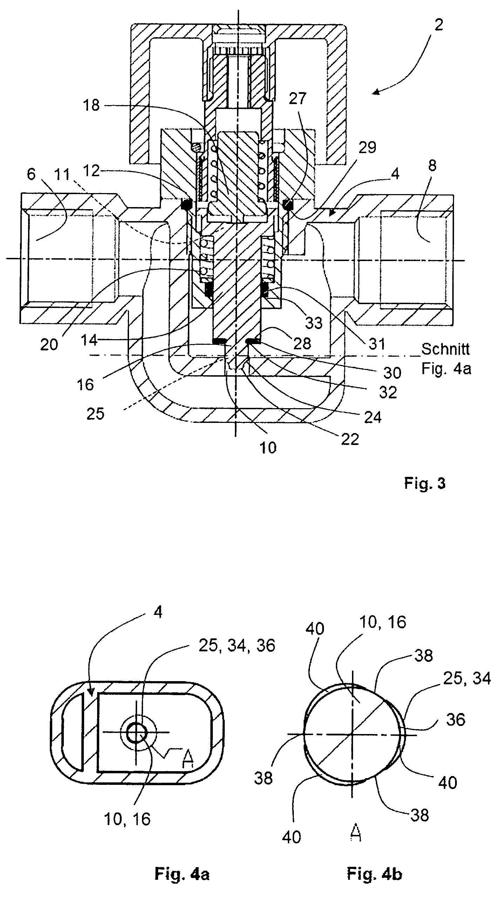

**Fig. 3** zeigt das erfindungsgemäße Etagenregulierventil 2 in Regelposition. Der Steuerkolben 14 ist durch die Thermostat-gesteuerte Hubbewegung so weit in den Steuerkanal 10 abgesenkt, dass sich der Endabschnitt 22 mit der nach innen gewölbten Mantelfläche 24 unterhalb des Randes der Eintauchöffnung 25 befindet. In dieser Stellung des Steuerkolbens 14 wird der Steuerzapfen 16 in dem Steuerkanal 10 entlang axial verlaufender Berührlinien 38 (Fig. 4b) geführt, wobei die Berührlinien 38 durch die Formung der Querschnittsflächen von Steuerzapfen 16 und Steuerkanal 10 vorgegeben sind, siehe insbesondere Fig. 4b.

**Fig. 4a** zeigt einen Querschnitt durch das Ventilgehäuse entlang des in Fig. 3 bezeichneten Schnittes. Zu erkennen sind die Wandungen des Ventilgehäuses und die Lage der Eintauchöffnung 25 mit den Konturen der Querschnittsflächen 34, 36 von Steuerkanal 10 und Steuerzapfen 16.

Die Detailansicht in **Fig. 4b** zeigt die Konturen der Querschnittsflächen 34, 36 von Steuerkanal 10 und Steuerzapfen 16 in vergrößerter Darstellung. In diesem Ausführungsbeispiel weist der Steuerkanal 10 die Querschnittsfläche 34 eines "aufgeblähten" Kreisbogendreiecks als Gleichdick auf, wohingegen der eintauchende Steuerzapfen 16 einen kreisförmigen Querschnitt 36 aufweist. Durch diese Formgebung entstehen in der Fläche idealerweise drei Berührpunkte 38 - in der Darstellung wegen der geringen Radienunterschiede in Umfangsrichtung etwas unscharf wiedergegeben- , aus denen bei einer Hubbewegung des Steuerzapfens 16 entlang der Innenwand des Steuerkanals 10 drei axiale Berührlinien 38 hervorgehen, die den Steuerzapfen 16 führen und stets in einer festen Lage bezogen auf die Querschnittsfläche 34 des Steuerkanals 10 bzw. bezogen auf dessen Eintauchöffnung 25 halten. Zwischen den Berührpunkten/-linien 38 ergeben sich drei Teilflächen 40, die zusammen eine gesamte Strömungsquerschnittsfläche bilden und den Volumenstrom in der Regelposition bestimmen. Diese Strömungsquerschnittsfläche bleibt konstant, solange der Steuerzapfen 16 nicht aus dem Steuerkanal 10 heraustritt oder der Steuerkolben 14 in Verschlussstellung gebracht wird.

## Patentansprüche

1. Etagenregulierventil (2) mit einem Ventilgehäuse (4), welches einen Einlass (6) und einen Auslass (8) aufweist, die über einen Steuerkanal (10) miteinander verbunden sind und das einen Ventileinsatz (12) mit einem Steuerkolben (14) und mit einem den Steuerkolben (14) verstellenden Thermostatelement (18) aufnimmt, wobei an den Steuerkolben (14) ein Steuerzapfen (16) angeformt ist, der in den Steuerkanal (10) eintaucht,
**dadurch gekennzeichnet,**
**dass** der Steuerzapfen (16) in dem Steuerkanal (10) entlang axial verlaufender Berührlinien (38) geführt wird.

2. Etagenregulierventil (2) nach Anspruch 1,
**dadurch gekennzeichnet,**
**dass** der Steuerkanal (10) eine Querschnittsfläche (34) eines Gleichdicks aufweist.

3. Etagenregulierventil (2) nach Anspruch 1,
**dadurch gekennzeichnet,**
**dass** der Steuerzapfen (16) eine Querschnittsfläche (36) eines Gleichdicks aufweist.

4. Etagenregulierventil (2) nach Anspruch 2 oder 3,
**dadurch gekennzeichnet,**
**dass** die Gleichdick-förmige Querschnittsfläche (34 oder 36) die Grundform eines Bogendreiecks aufweist.

5. Etagenregulierventil (2) nach Anspruch 1,
**dadurch gekennzeichnet,**
**dass** der Steuerzapfen (16) oder der Steuerkanal (10) angeformte axial verlaufende Führungsstege aufweisen.

6. Etagenregulierventil (2) nach einem der Ansprüche 1 bis 5,
**dadurch gekennzeichnet,**
**dass** der Steuerkanal (10) einteilig mit dem Ventilgehäuse (4) ausgebildet ist.

7. Etagenregulierventil nach einem der Ansprüche 1 bis 5,
**dadurch gekennzeichnet,**
**dass** der Steuerkanal durch einen Ventilsitzring ausgebildet ist, welcher im Ventilgehäuse angeordnet ist.

8. Etagenregulierventil (2) nach einem der Ansprüche 1 bis 7,
**dadurch gekennzeichnet,**
**dass** der Steuerkolben (14) an dem Übergang zu dem Steuerzapfen (16) eine Ringschulter (28) mit einer umlaufenden Nut (32) aufweist, in die ein Dichtelement (30) zur Abdichtung in Verschlussposition des Steuerkolbens (14) eingelegt ist.

9. Etagenregulierventil (2) nach einem der Ansprüche 1 bis 8,
**dadurch gekennzeichnet,**
**dass** der Ventileinsatz (12) zur Abdichtung gegen das Ventilgehäuse (4) einen Dichtring (27) aufweist.

10. Etagenregulierventil (2) nach einem der Ansprüche 1 bis 9, **dadurch gekennzeichnet, dass** der Steuerkolben (14) zur Abdichtung gegen den Ventileinsatz (12) einen stufenförmigen Absatz (33) mit Dichtring (31) aufweist.

11. Etagenregulierventil (2) nach einem der Ansprüche 1 bis 10,
**dadurch gekennzeichnet,**
**dass** der Steuerzapfen (16) einen ringförmigen Gummieinsatz zur Reinigung des Steuerkanals (10) aufweist.

12. Etagenregulierventil (2) nach einem der Ansprüche 1 bis 11,
**dadurch gekennzeichnet,**
**dass** der Steuerzapfen (16) an seinem in den Steuerkanal (10) eintauchenden Ende konisch oder mit einer nach innen gewölbten Mantelfläche (24) in einen Endabschnitt (22) mit verjüngtem Querschnitt übergeht.

13. Anordnung mit Etagenregulierventilen (2) nach einem der Ansprüche 1 bis 12,
**gekennzeichnet durch**
eine Hintereinanderschaltung von zwei Etagenregulierventilen (2) mit individueller Regelcharakteristik, wodurch als Gesamtcharakteristik ein nicht-montoner Verlauf des Volumenstroms als Funktion der Temperatur einstellbar ist.

## Claims

1. A story control valve (2) having a valve housing (4), which has an inlet (6) and an outlet (8) connected to each other via a control duct (10) and receives a valve insert (12) comprising a control piston (14) and a thermostat element (18) adjusting the control piston (14), a control pin (16) being formed integrally on the control piston (14) and dipping into the control duct (10),
**characterized in that**
the control pin (16) is guided in the control channel (10) along axially running lines of contact (38).

2. The story control valve (2) according to claim 1,
**characterized in that**
the control duct (10) has a cross-sectional area (34) of a curve of constant width.

3. The story control valve (2) according to claim 1,
**characterized in that**
the control pin (16) has a cross-sectional area (36) of a curve of constant width.

4. The story control valve (2) according to claim 2 or 3,
**characterized in that**
the cross-sectional area (34 or 36) having the shape of a curve of constant width has the basic shape of a curved triangle.

5. The story control valve (2) according to claim 1,
**characterized in that**
the control pin (16) or the control duct (10) have axially running guide webs formed integrally thereon.

6. The story control valve (2) according to any one of claims 1 to 5,
**characterized in that**
the control duct (10) is formed in one piece with the valve housing (4).

7. The story control valve (2) according to any one of claims 1 to 5,
**characterized in that**
the control duct is formed by a valve seat ring arranged in the valve housing.

8. The story control valve (2) according to any one of claims 1 to 7,
**characterized in that**
in the area of transition to the control pin (16), the control piston (14) has an annular shoulder (28) having a circumferential groove (32), into which a sealing element (30) for sealing in the closed position of the control piston (14) is inserted.

9. The story control valve (2) according to any one of claims 1 to 8,
**characterized in that**
the valve insert (12) has a sealing ring (27) for sealing against the valve housing (4).

10. The story control valve (2) according to any one of claims 1 to 9,
**characterized in that**
the control piston (14) has a step-shaped shoulder (33) having a sealing ring (31) for sealing against the valve insert (12).

11. The story control valve (2) according to any one of claims 1 to 10,
**characterized in that**
the control pin (16) has an annular rubber insert for cleaning the control duct (10).

12. The story control valve (2) according to any one of claims 1 to 11,
**characterized in that**
at its end dipping into the control duct (10), the control pin (16) transitions conically or with an inwardly curved surface area (24) into an end section (22) having a tapered cross-section.

13. An assembly comprising story control valves (2) according to any one of claims 1 to 12,
**characterized by**
a series connection of two story control valves (2) having individual control characteristics, whereby a non-monotonous pattern of the volume flow can be set as an overall characteristic as a function of temperature.

## Revendications

1. Soupape de réglage d'étage (2) ayant un boîtier de soupape (4), qui présente une entrée (6) et une sortie (8) connectées l'une à l'autre par un conduit de commande (10) et qui reçoit un insert de soupape (12) comportant un piston de commande (14) et un élément de thermostat (18) ajustant le piston de commande (14), un tourillon de commande (16) étant formé de manière intégrale sur le piston de commande (14) et plongeant dans le conduit de commande (10),
**caractérisée en ce que**
le tourillon de commande (16) est guidé dans le conduit de commande (10) le long des lignes de contact (38) s'étendant axialement.

2. Soupape de réglage d'étage (2) selon la revendication 1,
**caractérisée en ce que**
le conduit de commande (10) présente une surface de section transversale (34) d'une courbe de largeur constante.

3. Soupape de réglage d'étage (2) selon la revendication 1,
**caractérisée en ce que**
le tourillon de commande (16) présente une surface de section transversale (36) d'une courbe de largeur constante.

4. Soupape de réglage d'étage (2) selon la revendication 2 ou 3,
**caractérisée en ce que**
la surface de section transversale (34 ou 36) en forme d'une courbe de largeur constante présente la forme d'un triangle arqué.

5. Soupape de réglage d'étage (2) selon la revendication 1,
**caractérisée en ce que**
le tourillon de commande (16) ou le conduit de commande (10) comportent des nervures de guidage s'étendant axialement et formées de manière intégrale sur ceux-ci.

6. Soupape de réglage d'étage (2) selon l'une quelconque des revendications 1 à 5,
**caractérisée en ce que**
le conduit de commande (10) et le boîtier de soupape (4) sont formés d'un seul tenant.

7. Soupape de réglage d'étage (2) selon l'une quelconque des revendications 1 à 5,
**caractérisée en ce que**
le conduit de commande est formé par une bague de siège de soupape disposée dans le boîtier de soupape.

8. Soupape de réglage d'étage (2) selon l'une quelconque des revendications 1 à 7,
**caractérisée en ce que**
dans la zone de transition vers le tourillon de commande (16), le piston de commande (14) présente un épaulement annulaire (28) comprenant une rainure circonférentielle (32), dans laquelle un élément d'étanchéité (30) est inséré pour l'étanchement dans la position fermée du piston de commande (14).

9. Soupape de réglage d'étage (2) selon l'une quelconque des revendications 1 à 8,
**caractérisée en ce que**
l'insert de soupape (12) comporte une bague d'étanchéité (27) pour l'étanchement contre le boîtier de soupape (4).

10. Soupape de réglage d'étage (2) selon l'une quelconque des revendications 1 à 9,
**caractérisée en ce que**
le piston de commande (14) présente un épaulement en gradins (33) comportant une bague d'étanchéité (31) pour l'étanchement contre l'insert de soupape (12).

11. Soupape de réglage d'étage (2) selon l'une quelconque des revendications 1 à 10,
**caractérisée en ce que**
le tourillon de commande (16) comporte un insert annulaire en caoutchouc pour le nettoyage du conduit de commande (10).

12. Soupape de réglage d'étage (2) selon l'une quelconque des revendications 1 à 11,
**caractérisée en ce qu'**
à son extrémité plongeant dans le conduit de commande (10), le tourillon de commande (16) se transforme de manière conique ou par une surface latérale (24) courbée vers l'intérieure en une partie d'extrémité (22) présentant une section transversale effilée.

13. Ensemble comprenant des soupapes de réglage d'étage (2) selon l'une quelconque des revendications 1 à 12,
**caractérisé par**
une connexion en série de deux soupapes de réglage d'étage (2) présentant des caractéristiques de réglage individuelles, ce qui permet de régler une progression non-monotone du débit comme caractéristique totale en fonction de la température.
